# EUROPÄISCHE PATENTSCHRIFT

(11) **EP 3 143 289 B1**
(45) Veröffentlichungstag und Bekanntmachung des Hinweises auf die Patenterteilung: **05.05.2021**
(21) Anmeldenummer: 15741825.2
(22) Anmeldetag: 25.03.2015
(51) Int. Cl.: F15B 13/02, F15B 7/08, H02N 2/04

(54) **HYDRAULISCHER AKTOR UND VERFAHREN ZUM BETRIEB EINES HYDRAULISCHEN AKTORS**
HYDRAULIC ACTUATOR AND METHOD FOR OPERATING A HYDRAULIC ACTUATOR
ACTIONNEUR HYDRAULIQUE ET MÉTHODE DE FONCTIONNEMENT D'UN ACTIONNEUR HYDRAULIQUE

(30) Priorität: 30.07.2014 DE 102014214977
(43) Veröffentlichungstag der Anmeldung: 22.03.2017
(73) Patentinhaber: MetisMotion GmbH, 81549 München (DE)
(72) Erfinder: BACHMAIER, Georg, 80469 München (DE); GÖDECKE, Andreas, 81677 München (DE); VONTZ, Thomas, 81539 München (DE); ZÖLS, Wolfgang, 81249 München-Lochhausen (DE)
(74) Vertreter: Hofstetter, Schurack & Partner
(86) Internationale Anmeldenummer: PCT/EP2015/056371
(87) Internationale Veröffentlichungsnummer: WO 2016/015879

(56) Entgegenhaltungen:
- WO-A1-2014/001083
- DE-A1-102011 085 127
- DE-A1-102012 222 173
- GODECKE ANDREAS ET AL: "Ratchet-type micro-hydraulic actuator to mimic muscle behavior", IECON 2013 - 39TH ANNUAL CONFERENCE OF THE IEEE INDUSTRIAL ELECTRONICS SOCIETY, IEEE, 10. November 2013 (2013-11-10), Seiten 3976-3981, XP032539148, ISSN: 1553-572X, DOI: 10.1109/IECON.2013.6699771 [gefunden am 2013-12-30]

## Beschreibung

Die Erfindung betrifft einen hydraulischen Aktor sowie ein Verfahren zum Betrieb eines hydraulischen Aktors.

Beispielsweise im Rahmen von "Industrie 4.0" wird eine größere Flexibilität der konventionellen maschinellen Automation angestrebt. In letzter Zeit gewinnt das so genannte "Soft Roboting" Bedeutung. Dabei sollen Roboter in der Fertigung direkt mit Menschen zusammenarbeiten. Voraussetzung hierfür sind Aktoren, welche eine variable Steifigkeit und eine geringe Masse aufweisen. Vorbild für solche Aktoren sind Muskeln den menschlichen Körpers, welche je nach Anwendungsfall vorspannen und somit die Steifigkeit erhöhen können. Im Normalzustand jedoch sind die Muskeln nicht vorgespannt, so dass bei einer Kollision mit einem steifen Gegenstand die Kraft auf den Körper und somit die Verletzungsgefahr minimiert ist. Bislang eingesetzte Aktoren jedoch weisen eine hohe Steifigkeit auf. Um Kollisionsfälle zu vermeiden, werden zusätzlich Sensoren herangezogen, welche Hindernisse erkennen und den Aktor im Ernstfall stoppen oder von einem Hindernis fortlenken.

Der WO 2014/001083 A1 ist eine Aktorvorrichtung zum Erzeugen einer linearen Bewegung als bekannt zu entnehmen, mit einem hydraulischen Aktor, welcher ein erstes Kolbenelement zum Betätigen des Aktors und eine zweites Kolbenelement zur Erzeugung der linearen Bewegung umfasst. Des Weiteren offenbart die DE 10 2012 222 173 A1 eine Ventilanordnung, mit einem Eingangsdurchgang und wenigstens einem Ausgangsdurchgang.

Aus der Offenbarung "Ratchet-type Micro-hydraulic Actuator to Mimic Muscle Behavior" von Goedecke Andreas et. al, IECON 2013 - 39th annual conference of the IEE Industrial Electronics Society, IEEE, 10. November 2013 (2013-11-10), Seiten 3976-3981 ist ein hydraulischer Aktor bekannt. Außerdem offenbart die DE 10 2011 085 127 A1 eine Einreichtung zur Betätigung einer Doppelkupplung.

Es ist daher Aufgabe der Erfindung, einen gegenüber dem Stand der Technik verbesserten Aktor, insbesondere mit variabler Steifigkeit, bereitzustellen. Es ist ferner Aufgabe der Erfindung, ein Verfahren zum Betrieb eines solchen Aktors bereitzustellen.

Diese Aufgabe wird mit einem hydraulischen Aktor mit dem in Anspruch 1 bzw. 2 angegebenen Merkmalen sowie mit einem Verfahren mit den in Anspruch 9 angegebenen Merkmalen gelöst. Bevorzugte Weiterbildungen der Erfindung ergeben sich aus den zugehörigen Unteransprüchen, der nachfolgenden Beschreibung und der Zeichnung.

Der erfindungsgemäße hydraulische Aktor umfasst einen mit einem Faltenbalg gebildeten Antriebszylinder einen hydraulischen Abtriebszylinder, welcher hydraulisch mit dem Antriebszylinder gekoppelt ist, einen Antriebsaktor, der mit dem Antriebszylinder bewegungsgekoppelt ist, sowie ein Druckbegrenzungsventil, welches abhängig von einer Einwirkzeit einer durch den Antriebsaktor ausgeübten Kraft auf den Antriebszylinder den Abtriebszylinder druckbegrenzt, indem sich ein Vorspannvolumen in Abhängigkeit von der Einwirkzeit der Kraft einstellen lässt und indem sich das Druckbegrenzungsventil mittels des Vorspannvolumen steuern lässt.

Zur Erfindung gehört auch ein hydraulischer Aktor, mit einem hydraulischen Antriebszylinder mit einem darin geführten Antriebskolben, mit einem hydraulischen Abtriebszylinder, welcher hydraulisch mit dem Antriebszylinder gekoppelt ist, mit einem Antriebsaktor, der mit dem Antriebskolben gekoppelt ist, sowie mit einem Druckbegrenzungsventil, welches abhängig von einer Einwirkzeit einer durch den Antriebsaktor ausgeübten Kraft auf den Antriebskolben den Abtriebszylinder druckbegrenzt, indem sich ein Vorspannvolumen in Abhängigkeit von der Einwirkzeit der Kraft einstellen lässt und indem sich das Druckbegrenzungsventil mittels des Vorspannvolumen steuern lässt.

Mittels des erfindungsgemäßen hydraulischen Aktors lässt sich mittels der Einwirkzeit der Kraft auf den Antriebskolben das Druckbegrenzungsventil steuern. Das Druckbegrenzungsventil, welches den Abtriebszylinder druckbegrenzt, stellt aufgrund dieser Druckbegrenzung die Steifigkeit des hydraulischen Aktors ein. Mittels der Einwirkzeit einer Kraft auf den Antriebskolben kann folglich die Steifigkeit des hydraulischen Aktors eingestellt werden.

Zweckmäßigerweise ist der hydraulische Aktor elektrisch steuerbar. Besonders bevorzugt ist der erfindungsgemäße hydraulische Aktor ein Piezoaktor oder ein elektrodynamischer Aktor oder ein elektromagnetischer Aktor. Ein solcher Aktor lässt sich besonders leicht elektrisch steuern.

Vorzugsweise ist bei dem erfindungsgemäßen hydraulischen Aktor der Antriebszylinder über ein Rückschlagventil und eine erste Drossel hydraulisch an das Vorspannvolumen gekoppelt, welches in einem Vorspannhydraulikzylinder, insbesondere mit einem Vorspannkolben, befindlich ist, wobei der Vorspannhydraulikzylinder oder der Vorspannkolben das Druckbegrenzungsventil stellt. Auf diese Weise lässt sich einfach mittels der Einwirkzeit einer Kraft auf den Antriebskolben über das Rückschlagventil und die Drossel hydraulisch das Vorspannvolumen einstellen, welches mittels des Vorspannkolbens das Druckbegrenzungsventil geeignet stellt.

Zweckmäßigerweise ist bei dem hydraulischen Aktor das Vorspannvolumen über eine zweite Drossel mit einem Reservoir hydraulisch verbunden. Auf diese Weise lässt sich bei entsprechender Einwirkzeit das Vorspannvolumen aus dem Reservoir speisen oder in das Reservoir entleeren.

In besonders bevorzugter Weiterbildung ist bei dem hydraulischen Aktor das Druckbegrenzungsventil zur Druckbegrenzung gegenüber dem oder zur Druckentlassung in das Reservoir angeordnet. Auf diese Weise kann bei einer geringen Steifigkeit des hydraulischen Aktors der Abtriebszylinder Druck in das Reservoir entlassen oder aber je nach Stellung des Druckbegrenzungsventils eine hohe Steifigkeit behalten.

Idealerweise ist bei dem hydraulischen Aktor gemäß der Erfindung im Abtriebszylinder ein Abtriebskolben geführt. Auf diese Weise fungiert der Abtriebskolben als agierendes Element des erfindungsgemäßen hydraulischen Aktors. Alternativ und ebenfalls bevorzugt ist der Abtriebszylinder mit einem Faltenbalg gebildet, sodass zumindest ein Teil des Abtriebszylinders das agierende Element des erfindungsgemäßen hydraulischen Aktors bildet.

In einer bevorzugten Weiterbildung des erfindungsgemäßen hydraulischen Aktors ist der Abtriebszylinder über ein vorgespanntes Rückschlagventil an den Antriebszylinder gekoppelt. Auf diese Weise kann bei einer hinreichenden Druckdifferenz zwischen Antriebszylinder und Abtriebszylinder ein Antrieb des Antriebszylinders oder des Antriebskolbens weitergeleitet werden. Je nach Druckverhältnissen kann jedoch auch der Antrieb zurückgestellt werden, ohne dass dies eine direkte Konsequenz auf den Abtriebszylinder hat, so dass beispielsweise infolge periodischer Bewegung des Antriebszylinders oder des Antriebskolbens ein großer linearer Hub mittels des Abtriebszylinders erreicht wird.

Bei dem erfindungsgemäßen Verfahren zum erfindungsgemäßen Betrieb eines hydraulischen Aktors wird der Antriebsaktor für die Dauer einer agierenden oder einer nicht agierenden Phase des Antriebsaktors mit Auslenkung mit einer Auslenkdauer in einer Auslenkfrequenz ausgelenkt, wobei die Auslenkdauer eine Bewegungssteifigkeit des hydraulischen Aktors und die Auslenkfrequenz die resultierende Auslenkgeschwindigkeit des hydraulischen Aktors festlegt.

Insbesondere ist bei dem erfindungsgemäßen Verfahren der Antriebsaktor elektrisch steuerbar, insbesondere ein Piezoaktor oder ein elektrodynamischer Aktor oder ein elektromagnetischer Aktor.

In einer weiteren Weiterbildung der Erfindung ist der hydraulische Antriebszylinder und/oder ist der hydraulische Abtriebszylinder und/oder ist der Vorspannhydraulikzylinder jeweils mit einem Faltenbalg gebildet.

Nachfolgend wird die Erfindung anhand eines in der Zeichnung dargestellten Ausführungsbeispiels näher erläutert. Es zeigen
- Figur 1: einen erfindungsgemäßen hydraulischen Aktor schematisch in einer hydraulischen Schaltskizze und
- Figur 2: drei Betriebsmodi (a), (b) und (c) des hydraulischen Aktors gemäß Figur 1 schematisch in einer diagrammatischen Darstellung.

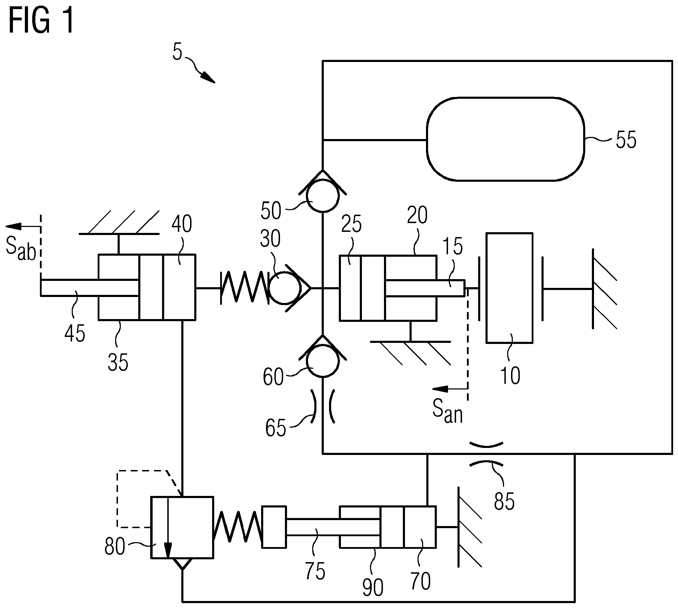

Der in Figur 1 dargestellte erfindungsgemäße hydraulische Aktor 5 umfasst einen Piezoaktor 10, welcher mit einem Antriebskolben 15 eines hydraulischen Antriebszylinders 20 bewegungsgekoppelt ist.

Der Antriebszylinder 20 umfasst ein hydraulisches Antriebsvolumen 25, welches in an sich bekannter Weise mit Hydrauliköl gefüllt ist. Dieses Antriebsvolumen 25 ist über ein Rückschlagventil 30 bei hinreichend hohem Öffnungsdruck öffnend mit einem hydraulischen Abtriebszylinder 35 hydraulisch gekoppelt. Das Rückschlagventil 30 ist entsprechend vorgespannt. Der Abtriebszylinder 35 weist antriebsseitig ein Abtriebsvolumen 40 auf, welches einen abtriebsseitig befindlichen Abtriebskolben 45 bewegt.

Das Antriebsvolumen ist zudem über ein Rückschlagventil 50 mit einem Reservoir 55 speisbar gekoppelt.

Darüber hinaus kann das Antriebsvolumen 25 über ein Rückschlagventil 60 und eine in Durchlassrichtung hinter dem Rückschlagventil 60 angeordnete Drossel 65 ein Vorspannvolumen 70 eines hydraulischen Vorspannzylinders 90 speisen, welche mittels eines Vorspannkolbens 75 ein Druckbegrenzungsventil 80 steuert. Über eine zweite Drossel 85 ist das Vorspannvolumen 70 an das Reservoir 55 gekoppelt. Das Druckbegrenzungsventil 80 druckbegrenzt oder druckentlastet das Abtriebsvolumen in das oder gegenüber dem Reservoir 55.

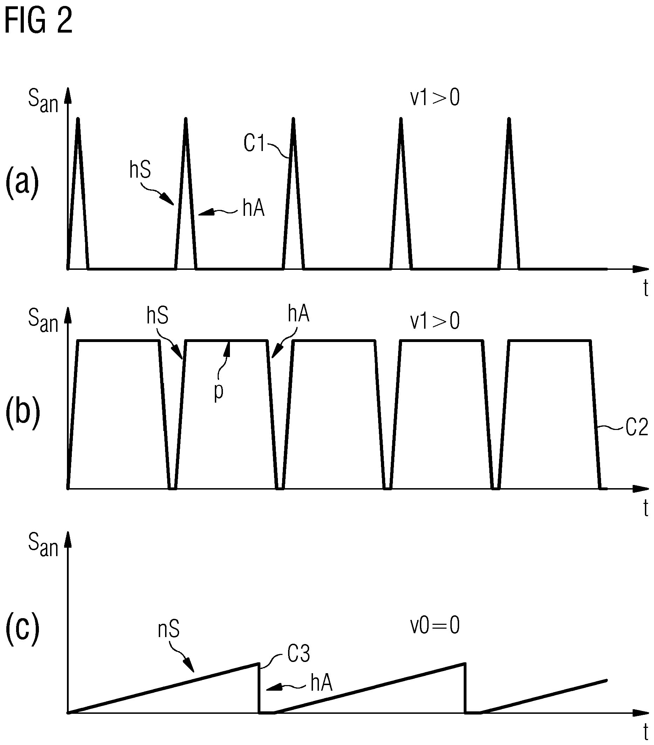

Der in Fig. 1 dargestellte erfindungsgemäße hydraulische Aktor 5 wird erfindungsgemäß wie nachfolgend beschrieben betrieben: Die einzelnen Betriebsmodi sind durch die Ansteuerung des Piezostellers 10 charakterisiert, wie sich aus den nachfolgend näher beschriebenen Stellweg-Zeit-Diagrammen (a), (b) und (c) gem. Fig. 2 ergibt.

In einem ersten Betriebsmodus wird der hydraulische Aktor mit einer geringen Systemsteifigkeit betrieben und mit einer von Null verschiedenen Stellgeschwindigkeit v1 gestellt:
Dazu wird der Piezosteller 10 wie mittels der Kurve C1 gem. Fig. 2 (a) diagrammatisch gezeigt gestellt: Der Piezosteller 10 wird schnell ausgelenkt (d.h., der Stellweg sₐₙ steigt mit hoher Steigung hS mit der Zeit t an). Somit steigt der Druck im Antriebsvolumen 25 des Antriebszylinders 20, sodass sich das das Antriebsvolumen 25 mit dem Abtriebsvolumen 40 koppelnde Rückschlagventil 30 und das das Antriebsvolumen 40 mit dem Vorspannvolumen 70 koppelnde Rückschlagventil 60 öffnen. Da in diesem ersten Betriebsmodus die Auslenkung des Piezostellers 10 und somit der Druckanstieg im Antriebsvolumen 25 nur sehr kurz ist, kann durch das das Antriebsvolumen 25 mit den Vorspannvolumen 70 koppelnde Rückschlagventil 60 aufgrund der seriell verbauten Drossel 65 annähernd kein Hydrauliköl in Richtung Vorspannvolumen 70 fließen, wobei dieser geringe Fluss von Hydrauliköl wieder über die das Vorspannvolumen 70 mit dem Reservoir koppelnden Drossel 85 ins Reservoir 55 abfließt. Somit baut sich im Vorspannvolumen 70 nahezu kein Druck auf. Folglich fließt das Hydrauliköl fast ausschließlich in das Abtriebsvolumen 40, sodass der Abtriebskolben 45 mit einem resultierenden Stellweg s_{ab} des hydraulischen Aktors 5 ausgetrieben wird.

Anschließend wird die Auslenkung des Piezostellers 10 wieder schlagartig (große negative Steigung hA der Kurve C1 in Fig. 2 (a)) verringert, wodurch das das Antriebsvolumen 25 mit dem Abtriebsvolumen 40 koppelnde Rückschlagventil 30 und das das Antriebsvolumen 40 mit dem Vorspannvolumen 70 koppelnde Rückschlagventil 60 schließen. Aufgrund des verringerten Hydrauliköls im Antriebsvolumen 25 entsteht Unterdruck, wodurch sich das das Antriebsvolumen 25 mit dem Reservoir 55 koppelnde Rückschlagventil 50 öffnet und das fehlende Hydrauliköl vom Reservoir 55 in das Antriebsvolumen 25 fließen kann.

Wird im ersten Betriebsmodus dieser Zyklus - d.h. schnelles Auslenken und Rückstellen des Piezostellers 10 - wiederholt, erfolgt eine kontinuierliche Auslenkung des Abtriebskolbens 45. Wirkt auf den Abtriebskolben 45 eine Gegenkraft ein, so erhöht sich gemäß dieser Gegenkraft und des hydraulischen Querschnitts des Abtriebszylinders 35 der Druck im Abtriebsvolumen 40. Da die Schwelle im Druckbegrenzungsventil 80 aufgrund des fehlenden Druckes im Vorspannvolumen 25 sehr gering ist, fließt Hydrauliköl schon bei einer geringen Gegenkraft auf den Abtriebskolben 45 vom Abtriebsvolumen 40 über das Druckbegrenzungsventil 80 in das Reservoir 55 zurück.

In einem zweiten Betriebsmodus wird der hydraulische Aktor 5 mit einer hohen Systemsteifigkeit betrieben und mit einer von Null verschiedenen Stellgeschwindigkeit v1 gestellt:
Dazu wird der Piezosteller 10 wie mittels der Kurve C2 gem. Fig. 2 (b) diagrammatisch gezeigt gestellt: Der Piezosteller 10 wird wie zuvor beschrieben schnell ausgelenkt (d.h., der Stellweg sₐₙ steigt wiederum mit hoher Steigung hS mit der Zeit t an).

Demgemäß steigt der Druck im Antriebsvolumen 25 an und das das Antriebsvolumen 25 mit dem Abtriebsvolumen 40 koppelnde Rückschlagventil 30 und das das Antriebsvolumen 40 mit dem Vorspannvolumen 70 koppelnde Rückschlagventil 60 öffnen. Durch das Abfließen des Hydrauliköls in das Abtriebsvolumen 40 sinkt der Druck im Antriebsvolumen 25 wie im zuvor beschriebenen Betriebsmodus.

Im Gegensatz zum vorherigen Betriebsmodus wird die Auslenkung des Piezostellers 10 hier für eine bestimmte Zeit konstant gehalten (siehe Teil p der Kurve C2 gem. Fig. 2 (b)). Da das das Antriebsvolumen 25 mit dem Abtriebsvolumen 40 koppelnde Rückschlagventil 30 einen definierten Öffnungsdruck hat, schließt es, wenn die Druckdifferenz zwischen Antriebsvolumen 25 und Abtriebsvolumen 40 kleiner als der Öffnungsdruck des Rückschlagventils 30 ist. Da der Piezosteller 10 immer noch ausgelenkt ist, liegt am das Antriebsvolumen 25 mit den Vorspannvolumen koppelnden Rückschlagventil 60 der verbleibende Druck an. Da das das Antriebsvolumen 25 mit den Vorspannvolumen 70 koppelnde Rückschlagventil 60 nicht vorgespannt ist, kann Hydrauliköl über dieses Rückschlagventil 60 und die diesem Rückschlagventil 60 flußabwärts angeordnete Drossel 65 solange fließen bis die Druckdifferenz zwischen Vorspannvolumen 70 und Antriebsvolumen 25 größer ist. Obwohl ein kleiner Teil Hydrauliköl wieder über die das Vorspannvolumen 70 mit dem Reservoir 55 koppelnde Drossel 85 ins Reservoir 55 zurückfließt, steigt der Druck im Vorspannvolumen 70 an. Dadurch wird die Öffnungsschwelle im Druckbegrenzungsventil 80 erhöht.

Nach einer bestimmten Zeit wird der Piezosteller 10 wieder schlagartig auf dessen ursprünglichen Stellweg sₐₙ rückgestellt (große negative Steigung hA der Kurve C2 in Fig. 2 (b)). Dadurch wird wie beim zuvor beschriebenen ersten Betriebsmodus Hydrauliköl vom Reservoir 55 in das Antriebsvolumen 25 gesaugt. Wäre die das Vorspannvolumen 60 mit dem Reservoir 55 koppelnde Drossel 85 nicht verbaut, so würde Hydrauliköl nicht nur aus dem Reservoir 55 sondern auch aus dem Vorspannvolumen 70 gesaugt werden.

Anschließend wird der beschriebene Zyklus - Auslenken und Rückstellen des Piezostellers 10 - wiederholt. Wirkt in diesem Fall auf den Abtriebskolben 45 eine Gegenkraft ein, so erhöht sich wieder der Druck in dem Abtriebsvolumen 40. Allerdings ist die Schwelle im Druckbegrenzungsventil 80 aufgrund des erhöhten Drucks im Vorspannvolumen 70 größer als im vorhergehend beschriebenen Betriebsmodus, wodurch eine höhere Kraft auf den Antriebskolben 15 aufgebaut werden kann und ein Abfließen von Hydrauliköl aus dem Abtriebsvolumen 40 verringert ist. Dadurch erhöht sich die Systemsteifigkeit des erfindungsgemäßen hydraulischen Aktors 5. Die Höhe dieser Steifigkeit wird somit über das Ansteuerungsprofil des Piezostellers 10 eingestellt.

In einem dritten Betriebsmodus wird der hydraulische Aktor 5 mit einer hohen Systemsteifigkeit betrieben und nicht gestellt( d.h. mit einer Stellgeschwindigkeit v0=0 gestellt):
Dazu wird der Piezosteller 10 wie mittels der Kurve C3 gem. Fig. 2 (c) diagrammatisch gezeigt gestellt:
Durch das langsame Auslenken (vergleichsweise geringe Steigung nS) des Piezostellers 10 steigt der Druck im Antriebsvolumen 25 kaum an, wodurch sich nur das das Antriebsvolumen 25 mit dem Vorspannvolumen 70 koppelnde Rückschlagventil 60 öffnet, nicht aber das das Antriebsvolumen 25 mit den Abtriebsvolumen koppelnde Rückschlagventil 30. Dadurch wird kein Hydrauliköl in das Abtriebsvolumen 40, sondern nur in das Vorspannvolumen 70 gepumpt, wodurch die Schwelle des Druckbegrenzungsventils 80 und somit die Systemsteifigkeit des hydraulischen Aktors 5 ansteigt ohne dass sich der Abtriebskolben 45 auslenkt.

Nach einer bestimmten Zeit wird der Piezosteller 10 wieder schlagartig auf dessen ursprünglichen Stellweg sₐₙ rückgestellt (große negative Steigung hA der Kurve C3 in Fig. 2 (c)).

In nicht eigens dargestellten weiteren Ausführungsbeispielen, welche im Übrigen dem in Fig. 1 und 2 dargestellten Ausführungsbeispiel entsprechen, ist anstelle eines Piezostellers 10 oder eine elektrodynamischer oder ein elektromagnetischer Aktor vorhanden.

Es versteht sich, dass in weiteren, nicht eigens dargestellten Ausführungsbeispielen anstelle von hydraulischen Zylindern mit darin geführten Kolben für Antriebs- und/oder Abtriebs- und/oder Vorspannzylinder auch hydraulische Zylinder in der Art von Faltenbälgen ohne darin geführte Kolben vorgesehen sein können.

## Patentansprüche

1. Hydraulischer Aktor, umfassend einen mit einem Faltenbalg gebildeten hydraulischen Antriebszylinder (20), einen hydraulischen Abtriebszylinder (35), welcher hydraulisch mit dem Antriebszylinder (20) gekoppelt ist, einen Antriebsaktor (10), der mit dem Antriebszylinder (20) bewegungsgekoppelt ist, **dadurch gekennzeichnet, dass** der hydraulische Aktor ferner ein Druckbegrenzungsventil (80) aufweist, welches abhängig von einer Einwirkzeit einer durch den Antriebsaktor (10) ausgeübten Kraft auf den Antriebszylinder (20) den Abtriebszylinder (35) druckbegrenzt, indem sich ein Vorspannvolumen (70) in Abhängigkeit von der Einwirkzeit der Kraft einstellen lässt und indem sich das Druckbegrenzungsventil (80) mittels des Vorspannvolumen (70) steuern lässt.

2. Hydraulischer Aktor, umfassend einen hydraulischen Antriebszylinder (20) mit einem darin geführten Antriebskolben (15), einen hydraulischen Abtriebszylinder (35), welcher hydraulisch mit dem Antriebszylinder (20) gekoppelt ist, einen Antriebsaktor (10), der mit dem Antriebskolben (15) bewegungsgekoppelt ist, **dadurch gekennzeichnet dass**, ein Druckbegrenzungsventil (80), welches abhängig von einer Einwirkzeit einer durch den Antriebsaktor (10) ausgeübten Kraft auf den Antriebskolben (15) den Abtriebszylinder (35) druckbegrenzt, indem sich ein Vorspannvolumen (70) in Abhängigkeit von der Einwirkzeit der Kraft einstellen lässt und indem sich das Druckbegrenzungsventil(80) mittels des Vorspannvolumen (70) steuern lässt.

3. Hydraulischer Aktor nach Anspruch 1 oder 2, bei welchem der Antriebsaktor (10) ein Piezoaktor oder eine elektrodynamischer oder ein elektromagnetischer Aktor ist.

4. Hydraulischer Aktor nach einem der vorhergehenden Ansprüche, bei welchem der Antriebszylinder (35) über ein Rückschlagventil (60) und eine erste Drossel (65) hydraulisch an das Vorspannvolumen (70) gekoppelt ist, welches in einem Vorspannhydraulikzylinder (90), insbesondere mit einem Vorspannkolben (75), befindlich ist, wobei der Vorspannhydraulikzylinder oder der Vorspannkolben das Druckbegrenzungsventil (80) stellt.

5. Hydraulischer Aktor nach Anspruch 4,
bei welchem das Vorspannvolumen (70) über eine zweite Drossel (85) mit einem Reservoir (55) hydraulisch verbunden ist.

6. Hydraulischer Aktor nach einem der vorhergehenden Ansprüche,
bei welchem das Druckbegrenzungsventil (80) zur Druckbegrenzung gegenüber oder zur Druckentlastung in das Rerservoir (55) angeordnet ist.

7. Hydraulischer Aktor nach einem der vorhergehenden Ansprüche,
bei welchem im Abtriebszylinder (35) ein Abtriebskolben (45) geführt ist.

8. Hydraulischer Aktor nach einem der vorhergehenden Ansprüche,
bei welchem der Antriebszylinder (20) über ein vorgespanntes Rückschlagventil (30) an den Abtriebszylinder (35) gekoppelt ist.

9. Verfahren zum Betrieb eines hydraulischen Aktors (5) nach einem der vorhergehenden Ansprüche, bei welchem der Antriebsaktor (10) für die Dauer einer agierenden oder nicht agierenden Phase des Antriebsaktors (10) mit Auslenkung mit einer Auslenkdauer (p) in einer Auslenkfrequenz ausgelenkt wird, wobei die Auslenkdauer (p) eine Bewegungssteifigkeit des hydraulischen Aktors (5) und die Auslenkfrequenz die resultierende Auslenkgeschwindigkeit (v1) des hydraulischen Aktors (5) festlegt.

10. Verfahren nach dem vorhergehenden Anspruch,
bei welchem der Antriebsaktor (10) elektrisch steuerbar, insbesondere ein Piezoaktor oder ein elektrodynamisch Aktor oder ein elektromagnetischer Aktor ist.

## Claims

1. Hydraulic actuator,
comprising a hydraulic drive cylinder (20) configured with a bellows, a hydraulic output cylinder (35), which is hydraulically coupled to the drive cylinder (20), a drive actuator (10), which is motion-coupled to the drive cylinder (20),
**characterized in that**
the hydraulic actuator further comprises a pressure limitation valve (80), which depending on an acting time of a force exerted by the drive actuator (10) upon the drive cylinder (20) pressure-limits the output cylinder (35), by a preload volume (70) being adjustable depending on the acting time of the force and by the pressure limitation valve (80) being controllable by means of the preload volume (70).

2. Hydraulic actuator,
comprising a hydraulic drive cylinder (20) with a drive piston (15) guided therein, a hydraulic output cylinder (35), which is hydraulically coupled to the drive cylinder (20), a drive actuator (10), which is motion-coupled to the drive piston (15),
**characterized in that**
a pressure limitation valve (80), which depending on an acting time of a force exerted by the drive actuator (10) upon the drive piston (15) pressure-limits the output cylinder (35), by a preload volume (70) being adjustable depending on the acting time of the force and by the pressure limitation valve (80) being controllable by means of the preload volume (70).

3. Hydraulic actuator according to claim 1 or 2,
in which the drive actuator (10) is a piezo actuator or an electrodynamic or an electromagnetic actuator.

4. Hydraulic actuator according to any one of the preceding claims,
in which the drive cylinder (35) is hydraulically coupled via a check valve (60) and a first throttle (65) to the preload volume (70), which is present in a preload hydraulic cylinder (90), in particular with a preload piston (75), wherein the preload hydraulic cylinder or the preload piston controls the pressure limitation valve (80).

5. Hydraulic actuator according to claim 4,
in which the preload volume (70) via a second throttle (85) is hydraulically connected to a reservoir (55).

6. Hydraulic actuator according to any one of the preceding claims,
in which the pressure limitation valve (80) is arranged for pressure limitation with respect to or pressure relief into the reservoir (55).

7. Hydraulic actuator according to any one of the preceding claims,
in which in the output cylinder (35) an output piston (45) is guided.

8. Hydraulic actuator according to any one of the preceding claims,
in which the drive piston (20) via a preloaded check valve (30) is coupled to the output cylinder (35).

9. Method for operation of a hydraulic actuator (5) according to any one of the preceding claims, in which method the drive actuator (10) for the duration of an acting or non-acting phase of the drive actuator (10) is displaced with displacement with a displacement period (p) at a displacement frequency, wherein the displacement period (p) determines a motion rigidity of the hydraulic actuator (5) and the displacement frequency the resulting displacement velocity (vl) of the hydraulic actuator (5).

10. Method according to the preceding claim,
in which the drive actuator (10) is electrically controllable, in particular is a piezo actuator or an electrodynamic actuator or an electromagnetic actuator.

## Revendications

1. Actionneur hydraulique, comprenant un cylindre d'entraînement hydraulique (20) formé avec un soufflet, un cylindre entraîné hydraulique (35), qui est couplé hydrauliquement au cylindre d'entraînement (20), un actionneur d'entraînement (10), qui est couplé en mouvement au cylindre d'entraînement (20), **caractérisé en ce que** l'actionneur hydraulique comprend en outre une soupape limitatrice de pression (80), qui limite en pression le cylindre entraîné (35) en fonction d'un temps d'action d'une force exercée sur le cylindre d'entraînement (20) par l'actionneur d'entraînement (10), par le fait qu'un volume de prétension (70) peut être ajusté en fonction du temps d'action de la force et par le fait que la soupape limitatrice de pression (80) peut être régulée au moyen du volume de prétension (70) .

2. Actionneur hydraulique, comprenant un cylindre d'entraînement hydraulique (20) muni d'un piston d'entraînement (15) guidé dans celui-ci, un cylindre entraîné hydraulique (35), qui est couplé hydrauliquement au cylindre d'entraînement (20), un actionneur d'entraînement (10), qui est couplé en mouvement au piston d'entraînement (15), **caractérisé en ce qu'**une soupape limitatrice de pression (80) limite en pression le cylindre entraîné (35) en fonction d'un temps d'action d'une force exercée sur le piston d'entraînement (15) par l'actionneur d'entraînement (10), par le fait qu'un volume de prétension (70) peut être ajusté en fonction du temps d'action de la force et par le fait que la soupape limitatrice de pression (80) peut être régulée au moyen du volume de prétension (70) .

3. Actionneur hydraulique selon la revendication 1 ou 2, dans lequel l'actionneur d'entraînement (10) est un actionneur piézoélectrique ou un actionneur électrodynamique ou électromagnétique.

4. Actionneur hydraulique selon l'une quelconque des revendications précédentes, dans lequel le cylindre d'entraînement (35) est couplé hydrauliquement par l'intermédiaire d'une soupape anti-retour (60) et d'un premier étranglement (65) au volume de prétension (70), qui se trouve dans un cylindre hydraulique de prétension (90), notamment muni d'un piston de prétension (75), le cylindre hydraulique de prétension ou le piston de prétension réglant la soupape limitatrice de pression (80).

5. Actionneur hydraulique selon la revendication 4, dans lequel le volume de prétension (70) est relié hydrauliquement à un réservoir (55) par l'intermédiaire d'un deuxième étranglement (85).

6. Actionneur hydraulique selon l'une quelconque des revendications précédentes, dans lequel la soupape limitatrice de pression (80) est agencée dans le réservoir (55) pour la limitation de pression ou le déchargement de pression.

7. Actionneur hydraulique selon l'une quelconque des revendications précédentes, dans lequel un piston entraîné (45) est guidé dans le cylindre entraîné (35).

8. Actionneur hydraulique selon l'une quelconque des revendications précédentes, dans lequel le cylindre d'entraînement (20) est couplé au cylindre entraîné (35) par l'intermédiaire d'une soupape anti-retour prétendue (30).

9. Procédé d'exploitation d'un actionneur hydraulique (5) selon l'une quelconque des revendications précédentes, dans lequel l'actionneur d'entraînement (10) est dévié pendant la durée d'une phase d'intervention ou de non-intervention de l'actionneur d'entraînement (10) avec une déviation ayant une durée de déviation (p) à une fréquence de déviation, la durée de déviation (p) définissant une résistance au mouvement de l'actionneur hydraulique (5) et la fréquence de déviation définissant la vitesse de déviation résultante (v1) de l'actionneur hydraulique (5) .

10. Procédé selon la revendication précédente, dans lequel l'actionneur d'entraînement (10) est régulable électriquement, notamment un actionneur piézoélectrique ou un actionneur électrodynamique ou un actionneur électromagnétique.
